(19)

Europäisches
Patentamt

European
Patent Office

Office européen
des brevets

(11) **EP 1 556 957 B1**

(12) **EUROPEAN PATENT SPECIFICATION**

(45) Date of publication and mention
of the grant of the patent:
**11.02.2009 Bulletin 2009/07**

(51) Int Cl.:
***H04B 1/713*** (2006.01)

(21) Application number: **03748449.0**

(86) International application number:
**PCT/IB2003/004521**

(22) Date of filing: **14.10.2003**

(87) International publication number:
**WO 2004/038938 (06.05.2004 Gazette 2004/19)**

(54) **BEACON CHANNEL FOR FREQUENCY HOPPING WIRELESS DEVICES**

BAKENKANALAUFBAU FÜR SCHNURLOSGERÄTE IN EINEM FREQUENZSPRUNGSYSTEM

CANAL DE BALISAGE POUR DISPOSITIFS SANS FIL A SAUTS DE FREQUENCE

(84) Designated Contracting States:
**AT BE BG CH CY CZ DE DK EE ES FI FR GB GR
HU IE IT LI LU MC NL PT RO SE SI SK TR**

(30) Priority: **24.10.2002 GB 0224753**

(43) Date of publication of application:
**27.07.2005 Bulletin 2005/30**

(73) Proprietor: **Koninklijke Philips Electronics N.V.
5621 BA Eindhoven (NL)**

(72) Inventors:
• **FULTON, P. M.**
**c/o Philips Intel. Prop. & Standards
Surrey RH1 5HA (GB)**
• **OZERIN, I.,**
**c/o Philips Intel. Prop. & Standards
Surrey RH1 5HA (GB)**
• **DOOLEY, S. R.**
**c/o Philips Intel. Prop. & Standards
Surrey RH1 5HA (GB)**

(74) Representative: **Damen, Daniel Martijn et al
Philips
Intellectual Property & Standards
P.O. Box 220
5600 AE Eindhoven (NL)**

(56) References cited:
WO-A-00/69186          WO-A-02/49272
WO-A-99/37106          WO-A-99/52319
US-A- 5 428 637

**Description**

FIELD OF THE INVENTION

The invention relates to devices arranged to communicate using a frequency hopping interface, and to find other devices within range, to methods of communicating between such devices, to methods of offering a location based service using information transmitted to mobile devices by these methods, to corresponding software, and to groups of access points for use with such mobile devices.

BACKGROUND

It is known to have beacon signals transmitted from base stations of a wireless communications network to enable mobile terminals to update their position. An example is shown in GB patent 2298108 relating to the CT2 air interface standard (I-ETS 300 131, Nov 1994), involving using a guard band between time division multiplexed channels to broadcast the beacon channel. More recent air interface protocols use frequency hopping techniques, and can create ad-hoc networks. An example is the well known Bluetooth™ standard, developed by the Bluetooth special interest group. This system applies frequency hopping to enable the construction of low-power, low-cost radios with a small footprint. The system supports both data and voice, applying fast frequency hopping in combination with a robust voice coding. The frequency hopping has a nominal rate of 1600 hops per second (hops/s) through the entire 2.4 GHz ISM band, which is 80 MHz wide. Devices based on bluetooth wireless technology can create piconets, which comprise a master device and one or more slave devices connected via the FH (frequency hopping) piconet channel. Slave devices can be in a parked mode to save power while still synchronised to the channel.

The standard includes provision of a beacon channel. The beacon channel consists of one beacon slot or a train of equidistant beacon slots which is transmitted periodically with a constant time interval. The beacon channel serves four purposes according to the standard:

1. transmission of master-to-slave packets which the parked slaves can use for re-synchronization
2. carrying messages to the parked slaves to change the beacon parameters
3. carrying general broadcast messages to the parked slaves
4. unparking of one or more parked slaves.

It is known from PCT patent publication WO 0249272 to form ad hoc radio local area networks using Bluetooth, and use the beacon channel for parking portable devices in range of an anchor unit, once they have been identified as being within range, to reduce the time spent establishing and releasing connections.

Portable devices should quickly and efficiently gather data from base stations such that a mobile user is not required to undertake actions such as staying close to a base station whilst contact is established between portable device and base station, nor having to specifically initiate interaction. In the ideal case, the terminal will detect fixed beacon base stations and extract basic information from them without needing to transmit at all. However, the current Bluetooth specification does not describe this type of broadcast operation. The existing methodology for implementing a radio beacon is to perform a two-step connection process, commencing with the discovery of devices followed by the actual transmission of the information using the same device. Bluetooth requires that the discovery phase is completed before a transmission can take place. When used in a dynamic mobile environment, the time this process takes can be seconds or tens of seconds, which can often be longer than the actual time the device is in range, causing the information not to reach the client.

The frequency hopping nature of the system means that, in order for broadcast messages (or, indeed, any messages) to be received by a passing terminal, the terminal has to be synchronised to the base station in both time and frequency. It has to synchronise its clock to the base station clock and, from the base station's identity, deduce which of several hopping sequences is being employed.

To do this, the terminal has to join the piconet administered by the base station (piconet master) as a slave. Two sets of procedures are used: INQUIRY and PAGE. Inquiry allows a device to find the address of other devices. Page allows a would-be master to invite slaves of its choice to join the piconet.

From this it can be seen that the time taken for the transaction to be completed is an issue. Due to the mobility of the clients and the typically small range of Bluetooth base stations, the time taken for a transaction to be performed can be critical. Should the time for this interaction to be performed in full (i.e. from an inquiry stage to the actual service interaction) be too long, the client will be out of range of the beacon and will not have received the service information.

Another issue is the power consumption of the mobile device. Since the mobile device is required to be compact and light, power consumption is an issue when adding additional functionality to the device. Since each transmission requires significantly more power than reception, this can quickly drain the available power from the battery of the mobile.

Many individual base stations, each performing their own inquiry will increase the total number of packets on the air, which is undesirable because it increases interference with other devices.

Since the Inquiry procedure has been invented specifically to solve the problem of bringing together master and slave, one solution shown in PCT patent publication WO 0201814 is to piggy-back a broadcast channel on the inquiry messages issued by the master. This can help get small amounts of local information such as references to shops, maps, restaurants and so on, to the portable device without the delays of setting up a connection. At the air interface, this mechanism can be entirely compatible with existing Bluetooth systems.

In PCT patent publication WO 02058331 this is extended by having the beacon device send additional data using a spread spectrum technique in the inquiry message. This can enable more data to be sent more robustly, without the delays involved in setting up a frequency hopping connection.

To improve speed and power consumption, a split beacon technique is proposed in PCT patent publication WO 0201815 in which a first fixed beacon device is dedicated to broadcasting a series of inquiry messages. The portable device replies with an identifier which is passed on to a second fixed beacon, and the second fixed beacon carries out all service interactions. The ability of the first beacon to issue inquiry packets continuously can make the process quicker. By having the second beacon handle all interactions, the first beacon does not have to pause operation to issue page messages, nor does it have to stop to allow interactive traffic. As a consequence, the portable device never has to wait for the first beacon to enter inquiry mode, which can represent a significant time saving.

It is also known for the portable devices to initiate discovery, rather than relying entirely on listening for transmissions from fixed devices. For a mobile Bluetooth device to be constantly aware of its neighbouring devices, it can discover them by regularly inquiring, e.g. the Periodic Inquiry process as set out in the current Bluetooth specification.

This Periodic Inquiry process involves transmitting sequences of ID packets of at least 1.28s in length at average intervals of at least 3.2s, successive packets being transmitted on different frequencies. A response window is provided between each packet. Any device in inquiry scan mode which is listening on one of the frequencies can make use of the next response time slot to send an FHS (frequency hopping and synchronisation) packet. Since each response window allows only one response, a random backoff scheme introduces an average delay of 320ms to make use of a later response window and reduce the likelihood that FHS packets from different device collide with each other.

Periodic Inquiry is not a practical solution for most mobile Bluetooth devices as constant, repetitive use of inquiry will produce significant interference to other Bluetooth devices and can lead to excessive loading of scanning devices.

An example of this excessive loading is as follows. Scanning devices listen for one ID packet, backoff for a random interval then if they hear a second ID packet, reply with an FHS packet. They then immediately return to scan mode and the process repeats. This repetition ensures that every period of inquiry generates a series of FHS packets at different times and frequencies. Unfortunately, if a scanning device receives an ID packet every time it listens for one, as can happen if another master device is within range, it can become trapped in this sequence. Where constant detectability is desired, and where there are a number of Bluetooth devices performing periodic enquiry, the problem of scanning devices being trapped in a loop is magnified.

US patent 5428637 shows a frequency hopping system in which a first unit initiates a synchronisation state by sending a synchronisation signal which is followed by a series of timeslots preassigned to different units, for them to send an acknowledgement if they intend to transmit on the frequency hopping channel. The first unit then assigns a transmission slot to those units which have sent an acknowledgement.

SUMMARY OF THE INVENTION

It is an object of the invention to provide improved apparatus or methods, addressing such problems. According to a first aspect of the invention, there is provided: a first device for communicating with other devices using a frequency hopping wireless interface, as set out in claim 1.

By sending a number of messages, then providing a longer response window, long enough for multiple responses, rather than one message then one response, the process can be faster than before. This is partly owing to less time being wasted by guard bands between transmit and receive time slots. More notably, the other devices can have much shorter backoff times, than those of the known Bluetooth periodic inquiry process, as they need not wait until they have detected another message from the first device. The reduced number of response frequencies can save the mobile device from needing to listen to all the frequencies, which can save time and reduce the number of guard bands between time slots for listening to each frequency. This can enable the response window to be kept shorter. The combination of features gives a good chance of a response being received in the first available response window, and hence the overall time for short transactions such as a single request and response for device discovery, can be kept short. This in turn leads to low power consumption and low chance of interference between devices. Also, as the other devices can respond more quickly, an interval between sequences of the messages can be increased, thus lowering the total amount of packets broadcast, and lowering the amount of processing at the first device, all of which helps save power consumption.

Also, the scanning mode trap can be avoided as there is no need for the other devices to return to the scanning mode.

As an additional feature of some embodiments, the sequence of frequencies of the messages is predetermined and related to the time of the start of the response window. This can enable the start of the window to be determined by the other devices.

As an additional feature of some embodiments, the first device is a mobile device. If the mobile device initiates the finding process, the fixed base stations need not transmit when there are no mobiles in range. Also mobile devices benefit greatly from the measures which keep the power consumption low.

As an additional feature of some embodiments, the sequence of messages has an indication of a response channel. This can make it easier for the other devices to calculate which frequency to use for the response, and the response frequency can be varied to ensure even use of spectrum. The overall time for short transactions such as a single request and response for device discovery, can be kept short, which leads to low power consumption and low chance of interference between devices.

As an additional feature of some embodiments, the return information includes received signal strength information from the other device or devices. This can be useful for deciding when to handoff.

As an additional feature of some embodiments, the return information includes location information from the other device or devices. This can be useful for "context aware" or location based services.

As an additional feature of some embodiments, the return information includes frequency hopping and synchronisation information. This can enable more information to be exchanged using a conventional frequency hopping technique.

As an additional feature of some embodiments, the wireless interface is compatible with Bluetooth.

As an additional feature of some embodiments, the other device is a network access point. This can enable a mobile device to roam across a wide area fixed network.

As an additional feature of some embodiments, the response frequency indication comprises a four bit code. This can indicate one of 16 frequencies or groups of frequencies. In the latter case, the actual frequency and the response window start time can be determined by the other device with other information such as the frequency at which the message was received.

As an additional feature of some embodiments, the response channel indication is altered cyclically. This enables more even spectrum use.

As an additional feature of some embodiments, the first device has a mobile phone or mobile personal computer. This can enable such devices to receive and use local information for context aware services.

A second aspect of the invention provides one of the other devices for use with the first device of any preceding claim, the other device being arranged to listen for one or more of the messages, to determine a time of the response window after the sequence of messages, and to send return information on that response frequency to the first device without needing to establish a frequency hopping connection.

As an additional feature, the messages include an indication of a response channel, and the other device is arranged to determine the time of the response window using the indication.

Another aspect of the invention provides a method of communicating between a first device and other devices having a frequency hopping wireless interface, the method having the steps of: sending from the first device a sequence of messages each on a different frequency, for finding other devices within range, listening at the first device on one response frequency or on a subset of less than all possible response frequencies, during a response window having a duration sufficient to receive more than one response determining at each of the other devices in range, a time of the response window after the sequence of messages, and sending a response during the response window, from each of the other devices in range, to the first device, containing return information without needing to set up a frequency hopping connection.

Embodiments can enhance services offered on mobile devices, using return information sent to mobile devices by the above method, where the first device is a mobile device, and the added value of services enabled by the devices or methods can be much greater than the value of the devices or methods. Embodiments can enable provision of a group of access points, each incorporating an other device, and coupled to provide location information, or access to other telecommunications networks. This group could provide widespread coverage and be owned or run by an operator and become a very valuable piece of infrastructure, critical for value-generating services.

Another aspect of the invention provides a first device for communicating with other devices using a frequency hopping wireless interface, as set out in claim 19.

Features can be in the form of software for running on or defining the operation of conventional firmware or hardware such as microprocessors, digital signal processors, application specific integrated circuits and so on.

Any of the additional features can be combined together or with any of the aspects of the invention, as would be apparent to those skilled in the art. Other advantages may be apparent to those skilled in the art, especially over other prior art not known to the inventors.

BRIEF DESCRIPTION OF THE DRAWINGS

Embodiments of the invention will now be described by way of example, and with reference to the accompanying drawings, in which:

Fig 1 shows a prior art arrangement of mobile devices coupled to networks via access points to which embodiments of the invention can be applied ;
Fig 2 shows an overview of a beacon channel process according to an embodiment of the invention;
Fig 3 shows an overview of mobile and fixed devices using the beacon channel sequence according to an embodiment of the invention;
Fig 4 shows message and response window timing according to an embodiment of the invention;
Fig 5 shows message format according to an embodiment of the invention;
Fig 6 shows frequency sets for the messages of an embodiment of the invention;
Fig 7 shows a frequency selection scheme according to an embodiment of the invention;
Fig 8 shows a beacon channel structure according to an embodiment of the invention; and
Fig 9 shows a response packet according to an embodiment of the invention.

DETAILED DESCRIPTION

Embodiments of the invention will be described with reference to the Bluetooth specification, though it will be apparent that it is applicable to other frequency hopping wireless interface standards. One use for the embodiments is to provide constant location awareness in a network such as a Bluetooth Network Access Point (NAP) network, for example, in a power-efficient manner. It can allow mobile Bluetooth devices to know which NAP they are nearest and gain network information quickly and with a minimum of effort, without requiring a connection to any NAP. The Beacon Channel described below is also appropriate for exchanging more detailed geographical information through the Local Positioning profile.

Handset operation involves 20ms duration poll/response sequences, including a self-contained backoff procedure to avoid response collisions. The fixed Bluetooth NAPs are arranged to scan with a higher duty cycle than previously used, to make the system as fast as possible. The Beacon Channel is notable for low latency, low handset power usage and a low level of on-air packets. There are a number of uses for some basic level of data communication between Bluetooth units prior to or instead of connection establishment. Personal Area Networking (PAN) could be enhanced by use of connectionless data exchange in order to assist in connection set up and maintenance, including handoff. In particular, a PAN User device must be constantly aware of which NAPs are in connection range. The Beacon Channel provides an operating mode new to Bluetooth which can be used for PAN. Also, Local Positioning procedures for location based services can be improved by using the beacon channel rather than normal Bluetooth connections for exchanging geographical position data with APs. This improvement is particularly noticeable where there is a need for checking position at regular short intervals. The Beacon Channel can provide improvements in exchange time, privacy and system loading.

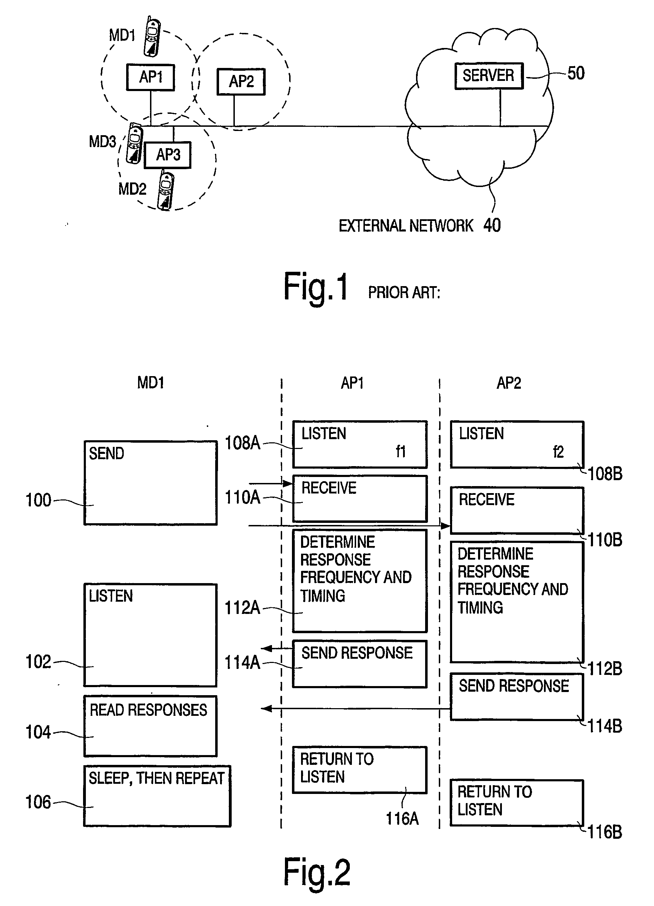

A view of a known set of devices to which embodiments of the invention can be applied is shown in Figure 1. It consists of a number of fixed Bluetooth Access Points AP1 to AP3, in a given area, some of which may be connected together forming networks. Mobile Bluetooth devices MD 1 to MD 3, move around in this area, and need to be constantly aware of neighbouring devices. A backbone couples the access points to external networks 40 and an example of a communication destination or end point 50, such as an internet server for example.

Figure 2 Overview of Beacon Channel sequence:

This figure shows a sequence chart of some of the main steps. The left column shows actions of the first device, while the middle and right columns show actions of two of the other devices. As shown, the first device can be a mobile device MD1 and the other devices can be fixed base stations such as network access points AP1,AP2. At 100, the first device sends a sequence of messages at different frequencies, then at 102 listens for responses during a response window, at a response frequency. At 104, it reads the return information in the responses, and uses the return information. If it is location information, then the device can update its position or use the information for location based services. The first device then sleeps at 106 then repeats this process every few seconds or minutes as appropriate.

The other devices (identified in the figure reference numerals by suffixes A and B respectively) listen (108A, B) at respective frequencies (f1,f2), receive (at 110A,B) respective ones of the messages, determine (at 112A,B) a response frequency, and determine a timing of the response window. They send (at 114A,B) their response within the window, after a random backoff period, then return to the listening state (at 116A,B).

Applied to the Bluetooth standard, the Beacon Channel allows mobile Bluetooth devices to regularly discover other devices by using ID (i.e. Inquiry) packets with a specially reserved Access Code (the Beacon Access Code or BAC) and an additional 4-bit Response Channel Indicator.

The mobile devices transmit short groups of (BAC based) ID packets at regular intervals, each group being followed by a short scan window. These ID packets include the Response Channel Indicator (RCI) and are identified with the label ID+.

When each scanning Access Point receives the ID+ messages, they respond with "Beacon" (BEA) packets sent on the channel given by the RCI. The packets may contain the same data as in FHS to allow connections to be created, or else carry user data (e.g. PAN network data).

There are several benefits of using the Beacon Channel for obtaining data from NAPs.

- Coexistence concerns are kept to a minimum as the number of on-air packets has been kept as low as possible. Additionally, as the mobile devices start the procedure, an empty network of Access Points produces no traffic.
- Power usage in the mobile devices has been kept to a level comparable with normal page and inquiry scanning by specifying a low duty cycle operation.
- It is a more efficient procedure than Periodic Inquiry from the point of view of the processing required in mobile devices.

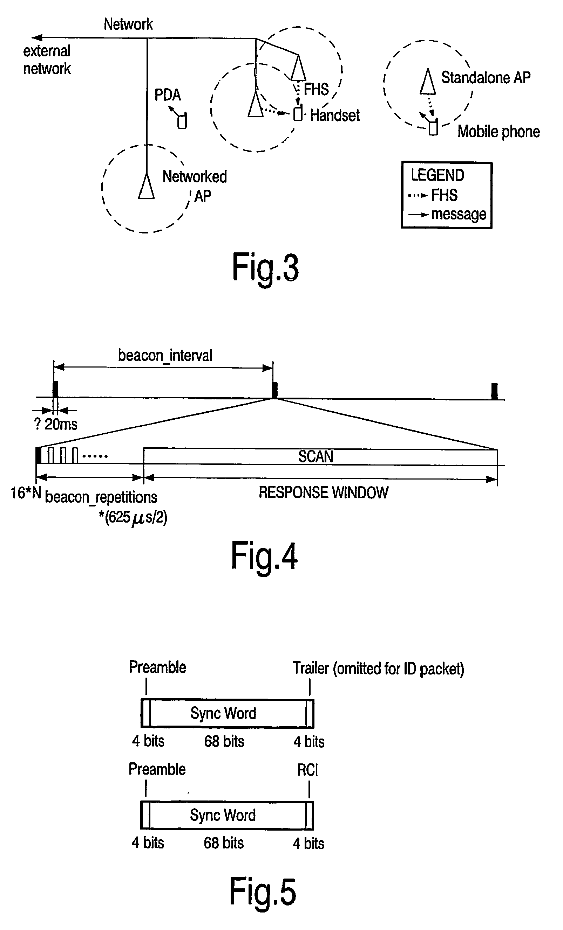

Figure 3 shows an overview of access points and mobile devices using the beacon channel process. Three of the access points are networked, another is a standalone access point in this example. Mobile devices shown include a personal digital assistant (PDA), a mobile phone, and another handset. The PDA is transmitting message sequences, but is not within range of any of the access points. The Handset has already found two access points in range and is receiving return information such as an FHS packet to enable it to set up an FH connection to receive large amounts of information. The mobile phone is transmitting a message sequence and receiving an FHS packet. In principle, the mobile devices can also act as listeners, be found by other mobile devices, and pass on whatever return information such as location information, or other control information such as hopping sequences, timings, device identities and so on, which they have obtained previously from fixed devices. This type of ad hoc networking can extend coverage and reduce the need for an operator to invest in fixed access points.

As shown in the timing chart of Figure 4, the Beacon Channel in the mobile device includes a sequence of 16 messages followed by a response window, taking up about 20 milliseconds. This is transmitted repeatedly at intervals termed the beacon_interval. In most cases, this value is best chosen as a few seconds. It includes a random element to prevent Mobile Devices repeatedly overlapping each other. An example of suitable limits are shown in table 1 below.

TABLE 1

| Parameter | Calculation | Values |
|---|---|---|
| $T_{average\_interval}$ | $T_{average\_interval}$ = N*1.28s 1 <=N<=255 | Range: 1.28 - 326.4s Default: 1.28s |
| ($T_{average\_interval}$ - 0.32) < *beacon_interval* < ($T_{average\_interval}$ + 0.32) | | |

The Beacon Channel consists of two parts, first transmitting a series of ID+ packets, then scanning for returned messages. The ID+ packet is shown in Figure 5 below, with or without the RCI (response channel indicator) field. It consists of a 4 bit preamble followed by a 68 bit sync word. Last is either a 4 bit trailer, or the additional RCI field which indicates the common response frequency channel on which devices should respond. A sequence of 16 ID+ packets are sent as a train at half slot intervals. This train may be optionally repeated a total Nbeacon_repetitions times. The more packets that are sent, the more likely it is that a response comes back. The calculation is shown in table 2.

TABLE 2, beacon repetition calculation

| Parameter | Calculation | Values |
|---|---|---|
| $T_{beacon\_repetilions}$ | $T_{beacon\_repetitions}$= N 1<=N<=4 | Range: 1-4 repetitions Default: 1 |

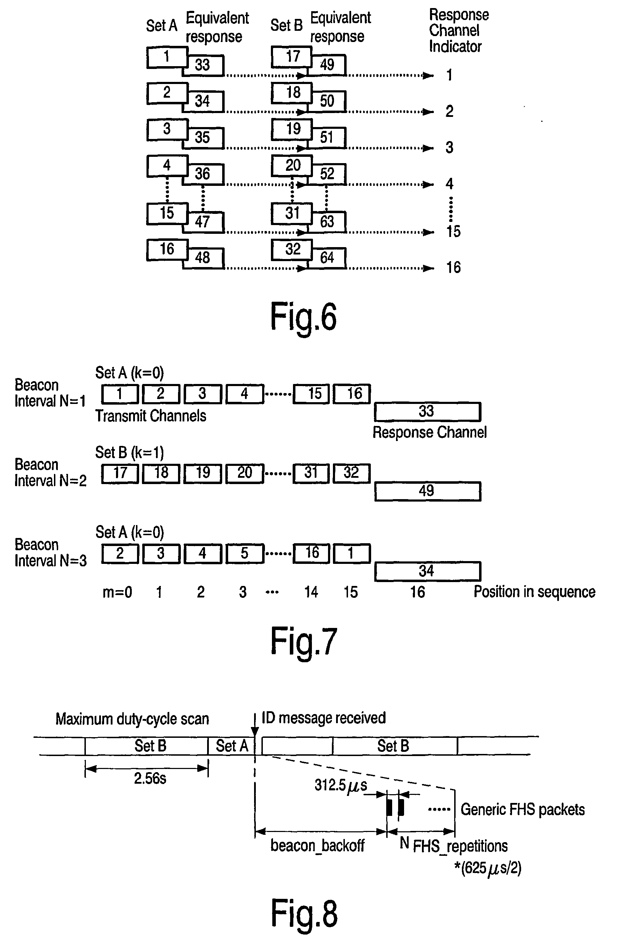

As for standard inquiry procedures, it is assumed that 64 frequencies out of the 79 available are available for the Beacon Channel. Half the set is used for transmissions from the Mobile Device, and half by the Access Point. The Mobile Device again splits its allocation into two parts, the A and B trains. Unlike with the A and B trains of normal inquiry, this grouping is fixed and does not change with the value of the Bluetooth clock. This leads to the arrangement of channels shown in figure 6 (from this, suitable frequencies used can be calculated using the BAC).

In order that all frequencies are used equally, the following selection procedure is used.

$$\text{Channel used} = (m+(k*16)+N)\bmod 32 + (X*32)$$

m = position in sequence, 0 - 16
k = set selector:     0 (set A)
                      1 (set B)
N = Interval Counter, 0-15
X = Rx/Tx switch:     0 (Tx)
                      1(Rx)

The A and B trains are selected alternately for each beacon interval, and the order in which the frequencies are used is cycled each time. The response frequency is always referred to the first frequency of the set. If set A contains channels 1 to 16 as indicated in Figure 6, then the first time it is transmitted then the frequencies are used in order. The first transmit frequency is 1, so 33 is used as the corresponding response frequency. The RCI value is 1 for this message. This is shown in Figure 7.

At the next beacon interval, the B train is used in a similar way. The third row of figure 7 uses set A again, but now the sequence has been cycled to start on channel 2. The corresponding response frequency is 34. The RCI indicator would be 1, so that a listening device can determine the state of this cycling, and determine the timing of the start of the response window, and the response frequency.

After the ID+ packets have been transmitted, the Mobile Device switches to scan on a single frequency for the duration of beacon_window. During this time, all Access Points which received an ID+ packet are expected to respond with FHS packets. The value was calculated to accommodate the backoff procedure described below for the Access Point.

$$\text{beacon\_window} = (\text{backoff length} + \text{default Mobile transmit time} +$$
$$\text{default AP transmit time}) = 25\text{slots} + 8\text{slots} + 1\text{slot} = 21.25\ \text{ms}$$

The appropriate scanning frequency is worked out directly from the RCI of the received inquiry message. The Access Point must scan for the BAC contained within ID+ packets, then transmit response BEA packets using the frequency channel as read from the RCI. A useful feature of the Beacon Channel is that the Access Point should scan for as much time as possible. It is the trade-off between Access Point scan time and the number of ID+ transmissions which keeps latency low for the system. An optimum Access Point would have a separate channel dedicated to correlating to the BAC.

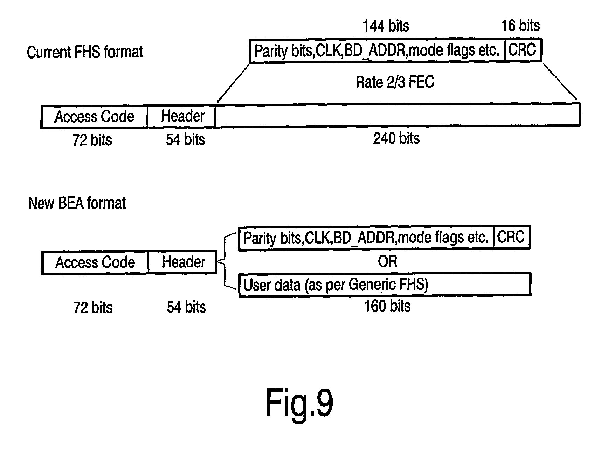

As shown in figure 8, to ensure even spectrum use the Access Point should cycle to a new scanning frequency every 2.56s, alternating A and B trains each time. On receipt of an ID+ packet, the Access Point pauses for a randomly calculated backoff time, then transmits a series of repeated BEA packets back to the mobile device at intervals of $312.5\mu s$. The BEA packets are shown in figure 9. These contain the same fields as normal FHS packets, but without the usual 2/3 FEC (forward error correction) protection. A 72 bit access code is followed by a 54 bit header. The normal 160 bits of FHS data such as parity bits, clock , BD_ADDR, mode flags etc, may be replaced with alternative fields at the discretion of the Access Point. In particular, PAN NAP segment identities or LP position estimates could be given. BEA response packets are repeated according to $N_{FHS\_repetitions}$ calculated as shown in table 3.

TABLE 3

| Parameter | Calculation | Values |
|---|---|---|
| $N_{FHS\_repetions}$ | $N_{FHS\_repetitions} = N$ 1<=N<=4 | Range: 1-4 repetitions Default: 1 |

The beacon_backoff time is significantly shorter than the backoff used for Bluetooth inquiry procedures, and is calculated as shown

$$beacon\_backoff = (8+(N/2)) * 625\ \mu s$$

$$0 <= N <= 51$$

This effectively gives 52 different backoff values distributed at one half-slot intervals. The further 8 slot offset ensures that no responses are generated before the Mobile Device has moved into the scan state.

As has been described above, a mobile device for communicating with other devices using a frequency hopping wireless interface such as bluetooth, sends a sequence of messages each on a different frequency, for finding other devices within range, and listens for a response during a subsequent response window, on one or more response frequencies. It receives information such as location information from the other devices without needing to set up a frequency hopping connection. The response window is long enough to receive more than one response. The overall time for short transactions such as a single request and response for device discovery, can be kept short. This in turn leads to low power consumption by mobile devices and low chance of interference between devices. An interval between sequences of the messages can be increased, thus lowering the total amount of packets broadcast. Other variations and examples within the scope of the claims will be apparent to those skilled in the art.

**Claims**

1. A first device (MD1-3) for communicating with other devices using a frequency hopping wireless interface, the first device being arranged to send a sequence of messages (ID) each on a different frequency, for finding other devices (AP1-3) within range, and being arranged to listen for a response during a subsequent response window, on one or more response frequencies, being a subset of less than all possible response frequencies, and to receive return information from the other devices without needing to set up a frequency hopping connection, the response window having a duration sufficient to receive more than one response.

2. The first device of claim 1, wherein the sequence of frequencies of the messages is predetermined and related to the time of the start of the response window.

3. The first device of claim 1 or 2, being a mobile device (MD1-3).

4. The first device of any preceding claim, the sequence of messages having an indication (RCI) of a response channel.

5. The first device of any preceding claim, the return information having received signal strength information (RSSI) from the other device or devices.

6. The first device of any preceding claim, the return information having location information from the other device or devices.

7. The first device of any preceding claim, the return information including frequency hopping and synchronisation information (FHS).

8. The first device of any preceding claim, the wireless interface being compatible with the Bluetooth standard.

9. The first device of any preceding claim, the other device being a network access point(AP1-3).

10. The first device of claim 4 or any claim depending on claim 4, the response channel indication comprising a four bit code.

11. The first device of claim 4 or any claim depending on claim 4, the response channel indication being altered cyclically.

12. The first device of any preceding claim, incorporating a mobile phone or mobile personal computer (PDA).

**13.** The first device of claim 4 or any claim depending on claim 4, being arranged to listen for responses from the other devices on one response frequency.

**14.** An other device (AP1-3) for use with the first device (MD1-3) of any preceding claim, the other device being arranged to listen for one or more of the messages, to determine a time of the response window after the sequence of messages, and to send return information on that response frequency to the first device without needing to establish a frequency hopping connection.

**15.** The other device of claim 14, the messages including an indication (RCI) of a response channel, and.the other device being arranged to use the response channel indication to send a response.

**16.** A method of communicating between a first device (MD1-3) and other devices (AP1-3) having a frequency hopping wireless interface, the method having the steps of: sending from the first device a sequence of messages (ID) each on a different frequency, for finding other devices within range, listening at the first device on one response frequency or on a subset of less than all possible response frequencies, during a response window having a duration sufficient to receive more than one response,
determining at each of the other devices in range, a time of the response window after the sequence of messages, and sending a response during the response window, from each of the other devices in range, to the first device, containing return information without needing to set up a frequency hopping connection.

**17.** A method of offering a service on mobile devices (MD1-3), using return information sent to mobile devices by the method of claim 16, where the first device is a mobile device.

**18.** The method of claim 17, the return information having location information, the service being a location based service, and the mobile device incorporating a mobile phone.

**19.** A group of access points, each incorporating an other device (AP1-3) of claim 14, and coupled to provide location information, or access to other telecommunications networks.

**20.** Software on a computer readable medium for execution by a first device (MD1-3) for use in the method of claim 15, for carrying out the steps of:

sending from the first device a sequence of messages (ID) each on a different frequency, for finding other devices (AP1-3) within range, and
listening at the first device on one response frequency or on a subset of less than all possible response frequencies, during a response window having a duration sufficient to receive more than one response.

**Patentansprüche**

**1.** Eine erste Anordnung (MD1-3) zur Kommunikation mit anderen Anordnungen, unter Verwendung einer drahtlosen Schnittstelle im Frequenzsprungsystem, wobei die erste Anordnung dazu vorgesehen ist, eine Folge von Nachrichten (ID) zu senden, je auf einer anderen Frequenz, zum Finden anderer Anordnungen (AP1-3) innerhalb des Gebietes, und dazu vorgesehen, während eines nachfolgenden Antwortfensters auf einer oder mehreren Antwortfrequenzen auf eine Antwort zu horchen, die ein Subsatz von weniger als allen möglichen Frequenzen sind, und zum Empfangen von Antwortinformation von den anderen Anordnungen ohne dass es dabei notwendig ist, eine Frequenzsprungverbindung aufzubauen, wobei das Antwortfenster eine Dauer hat, die zum Empfangen von mehr als nur eine Antwort ausreicht.

**2.** Die erste Anordnung nach Anspruch 1, wobei die Folge von Frequenzen der Nachrichten vorher bestimmt worden ist und sich auf die Zeit des Anfangs des Antwortfensters bezieht.

**3.** Die erste Anordnung nach Anspruch 1 oder 2, wobei diese Anordnung eine mobile Anordnung (MD1-3) ist.

**4.** Die erste Anordnung nach einem der vorstehenden Ansprüche, wobei die Folge von Nachrichten eine Angabe (RCI) eines Antwortkanals hat.

**5.** Die erste Anordnung nach einem der vorstehenden Ansprüche, wobei die Antwortinformation empfangene Signalstärkeninformation (RSSI) von der bzw. den anderen Anordnung(en) aufweist.

6.  Die erste Anordnung nach einem der vorstehenden Ansprüche, wobei die Antwortinformation Ortsinformation der anderen Anordnung(en) umfasst.

7.  Die erste Anordnung nach einem der vorstehenden Ansprüche, wobei die Antwortinformation Frequenzsprung- und Synchronisationsinformation (FHS) umfasst.

8.  Die erste Anordnung nach einem der vorstehenden Ansprüche, wobei die drahtlose Schnittstelle mit dem Bluetooth-Standard kompatibel ist.

9.  Die erste Anordnung nach einem der vorstehenden Ansprüche, wobei die andere Anordnung ein Netzwerkzugriffspunkt (AP1-3) ist.

10. Die erste Anordnung nach Anspruch 4 oder nach einem von Anspruch 4 abhängigen Anspruch, wobei die Antwortkanalangabe einen Vierbitcode enthält.

11. Die erste Anordnung nach Anspruch 4 oder nach einem von dem Anspruch 4 abhängigen Anspruch, wobei die Antwortkanalangabe zyklisch geändert wird.

12. Die erste Anordnung nach einem der vorstehenden Ansprüche, mit einem Mobiltelefon oder einem mobilen PC (PDA).

13. Die erste Anordnung nach Anspruch 4 oder einem von Anspruch 4 abhängigen Anspruch, vorgesehen zum Horchen auf Antworten von den anderen Anordnungen auf einer einzigen Antwortfrequenz.

14. Eine Andere Anordnung (AP1-3) zur Verwendung zusammen mit der ersten Anordnung (MD1-3) nach einem der vorstehenden Ansprüche, wobei die andere Anordnung dazu vorgesehen ist, auf eine oder mehrere der Nachrichten zu horchen, zum Ermitteln einer Zeitperiode des Antwortfensters nach der Folge von Nachrichten und zum Senden von Antwortinformation als Antwort auf diese Antwortfrequenz zu der ersten Anordnung ohne dass es dabei notwendig ist, eine Frequenzsprungverbindung aufzubauen.

15. Die andere Anordnung nach Anspruch 14, wobei die Nachrichten eine Angabe (RCI) eines Antwortkanals enthalten und die andere Anordnung dazu vorgesehen ist, die Antwortkanalangabe zum Senden einer Antwort zu benutzen.

16. Verfahren zur Kommunikation zwischen einer ersten Anordnung (MD1-3) und einer anderen Anordnung (AP1-3) mit einer drahtlosen Frequenzsprungschnittstelle, wobei das Verfahren die nachfolgenden Verfahrensschritte umfasst:

    - das Senden einer Folge von Nachrichten (ID) von der ersten Anordnung aus, je auf einer anderen Frequenz, zum Finden anderer Anordnungen in dem Gebiet,
    - das in der ersten Anordnung Horchen auf eine einzige Antwortfrequenz oder auf einen Subsatz von weniger als allen möglichen Antwortfrequenzen, während eines Antwortfensters mit einer Dauer, die zum Empfangen von mehr als nur einer Antwort ausreicht,
    - das in jeder der anderen Anordnungen in dem Gebiet Ermitteln einer Zeitperiode des Antwortfensters nach der Folge von Nachrichten, und
    - das Senden einer Antwort während des Antwortfensters von jeder der anderen Anordnungen in dem Gebiet aus, zu der ersten Anordnung, mit Antwortinformation ohne dass es dabei notwendig ist, eine Frequenzsprungverbindung aufzubauen.

17. Verfahren zum Leisten eines Dienstes bei mobilen Anordnungen (MD1-3), wobei Antwortinformation benutzt wird, die nach dem Verfahren nach Anspruch 16 mobilen Anordnungen zugeführt wird, wobei die erste Anordnung eine mobile Anordnung ist.

18. Verfahren nach Anspruch 17, wobei die Antwortinformation Ortsinformation enthält, wobei die Dienstleistung eine ortsbasierte Dienstleistung ist und die mobile Anordnung ein mobiles Telefon umfasst.

19. Eine Gruppe von Zugriffsstellen, die je eine andere Anordnung (AP1-3) nach Anspruch 14 enthalten und die je zum Liefern von Ortsinformation oder von Zugriff auf andere Telekommunikationsnetzwerke miteinander gekoppelt sind.

20. Software auf einem von einem Computer auslesbaren Medium zur Durchführung durch eine erste Anordnung (MD1-3) zur Anwendung des Verfahrens nach Anspruch 15, zum Durchführen der nachfolgenden Verfahrensschritte:

- das von der ersten Anordnung aus Senden einer Folge von Nachrichten (ID), je auf einer anderen Frequenz, zum Finden anderer Anordnungen (AP1-3) in dem Gebiet, und
- das in der ersten Anordnung Horchen auf eine Antwortfrequenz oder auf einen Subsatz von weniger als allen möglichen Antwortfrequenzen, während eines Antwortfensters mit einer Dauer, die zum Empfangen von mehr als nur einer Antwort ausreicht.

## Revendications

1. Premier dispositif (MD 1 à 3) pour communiquer avec d'autres dispositifs à l'aide d'une interface sans fil de fonctionnement en sauts de fréquence, le premier dispositif étant agencé de manière à envoyer une séquence de messages (ID), chacun sur une fréquence différente, afin de trouver d'autres dispositifs (AP 1 à 3) dans la gamme, et étant agencé de manière à écouter une réponse lors d'une fenêtre de réponse subséquente, sur une ou plusieurs fréquences de réponse, ce qui est un sous-ensemble de moins que toutes les fréquences de réponse possibles, et de manière à recevoir de l'information de retour des autres dispositifs sans qu'il ne soit nécessaire d'établir une connexion de fonctionnement en sauts de fréquence, la fenêtre de réponse ayant une durée qui est suffisante pour recevoir plus d'une réponse.

2. Premier dispositif selon la revendication 1, dans lequel la séquence de fréquences des messages est prédéterminée et se rapporte au temps du départ de la fenêtre de réponse.

3. Premier dispositif selon la revendication 1 ou selon la revendication 2, qui constitue un dispositif mobile (MD 1 à 3).

4. Premier dispositif selon l'une quelconque des revendications précédentes 1 à 3, la séquence de messages ayant une indication (RCI) d'un canal de réponse.

5. Premier dispositif selon l'une quelconque des revendications précédentes 1 à 4, l'information de retour ayant reçu de l'information d'intensité de signal (RSSI) en provenance de l'autre dispositif ou des autres dispositifs.

6. Premier dispositif selon l'une quelconque des revendications précédentes 1 à 5, l'information de retour ayant reçu de l'information d'emplacement en provenance de l'autre dispositif ou des autres dispositifs.

7. Premier dispositif selon l'une quelconque des revendications précédentes 1 à 6, l'information de retour comprenant de l'information de fonctionnement en sauts de fréquence et de synchronisation (FHS).

8. Premier dispositif selon l'une quelconque des revendications précédentes 1 à 7, l'interface sans fil étant compatible avec la norme du type Bluetooth.

9. Premier dispositif selon l'une quelconque des revendications précédentes 1 à 8, l'autre dispositif étant un point d'accès de réseau (AP 1 à 3).

10. Premier dispositif selon la revendication 4 ou selon l'une quelconque des revendications dépendant de la revendication 4, l'indication de canal de réponse comprenant un code de quatre bits.

11. Premier dispositif selon la revendication 4 ou selon l'une quelconque des revendications dépendant de la revendication 4, l'indication de canal de réponse étant modifiée cycliquement.

12. Premier dispositif selon l'une quelconque des revendications précédentes 1 à 11, comprenant un téléphone mobile ou un ordinateur personnel mobile (PDA).

13. Premier dispositif selon la revendication 4 ou selon l'une quelconque des revendications dépendant de la revendication 4, qui est agencé de manière à écouter les réponses en provenance des autres dispositifs sur une fréquence de réponse.

**14.** Autre dispositif (AP 1 à 3) pour être utilisé avec le premier dispositif (MD 1 à 3) selon l'une quelconque des revendications précédentes 1 à 13, l'autre dispositif étant agencé de manière à écouter un ou plusieurs des messages afin de déterminer un temps de la fenêtre de réponse après la séquence de messages et de manière à envoyer l'information de retour sur cette fréquence de réponse au premier dispositif sans qu'il ne soit nécessaire d'établir une connexion de fonctionnement en sauts de fréquence.

**15.** Autre dispositif selon la revendication 14, les messages comprenant une indication (RCI) d'un canal de réponse et l'autre dispositif étant agencé de manière à utiliser l'indication de canal de réponse afin d'envoyer une réponse.

**16.** Procédé de communication entre un premier dispositif (MD 1 à 3) et d'autres dispositifs (AP 1 à 3) ayant une interface sans fil de fonctionnement en sauts de fréquence, le procédé comprenant les étapes consistant à : envoyer du premier dispositif une séquence de messages (ID), chacun sur une fréquence différente, à trouver d'autres dispositifs dans la gamme, à écouter le premier dispositif sur une fréquence de réponse ou sur un sous-ensemble de moins que toutes les fréquences de réponse possibles lors d'une fenêtre de réponse ayant une durée qui est suffisante pour recevoir plus d'une réponse, à déterminer, de chacun des autres dispositifs dans la gamme, un temps de la fenêtre de réponse après la séquence de messages, et à envoyer une réponse, lors de la fenêtre de réponse, de chacun des autres dispositifs dans la gamme au premier dispositif contenant de l'information de retour sans qu'il ne soit nécessaire d'établir une connexion de fonctionnement en sauts de fréquence.

**17.** Procédé d'offre d'un service sur les dispositifs (MD 1 à 3) à l'aide de l'information de retour qui est envoyée à des dispositifs mobiles selon le procédé de la revendication 16 où le premier dispositif est un dispositif mobile.

**18.** Procédé selon la revendication 17, l'information de retour ayant de l'information d'emplacement, le service étant un service sur base d'emplacement et le dispositif mobile incorporant un téléphone mobile.

**19.** Groupe de points d'accès, chacun incorporant un autre dispositif (AP 1 à 3) de la revendication 14, et étant couplé de manière à fournir de l'information d'emplacement ou de l'accès à d'autres réseaux de télécommunications.

**20.** Logiciel sur un support lisible informatique pour être exécuté par un premier dispositif (MD 1 à 3) à utiliser dans le procédé de la revendication 15 afin d'effectuer les étapes suivantes consistant à :

envoyer du premier dispositif une séquence de messages (ID), chacun sur une fréquence différente, afin de trouver d'autres dispositifs (AP 1 à 3) dans la gamme, et
écouter le premier dispositif sur une fréquence de réponse ou sur un sous-ensemble de moins que toutes les fréquences de réponse possibles lors d'une fenêtre de réponse ayant une durée qui est suffisante pour recevoir plus d'une réponse.

Fig.1 PRIOR ART:

Fig.2

Network

external
network

PDA

FHS

Handset

Standalone AP

Mobile phone

Networked
AP

LEGEND
---► FHS
—► message

## Fig.3

beacon_interval

? 20ms

SCAN

16*N beacon_repetitions
*(625 μs/2)

RESPONSE WINDOW

## Fig.4

Preamble

Trailer (omitted for ID packet)

Sync Word

4 bits     68 bits     4 bits

Preamble

RCI

Sync Word

4 bits     68 bits     4 bits

## Fig.5

Set A   Equivalent   Set B   Equivalent            Response
              response              response             Channel
                                                         Indicator

    1    33          17    49 .........................► 1

    2    34          18    50 .........................► 2

    3    35          19    51 .........................► 3

    4    36          20    52 .........................► 4
                                                          :
   15    47          31    63 .........................► 15

   16    48          32    64 .........................► 16

## Fig.6

Set A (k=0)
Beacon
Interval N=1  | 1 | 2 | 3 | 4 |······| 15 | 16 |
              Transmit Channels           | 33 |
                                      Response Channel

Set B (k=1)
Beacon
Interval N=2  | 17 | 18 | 19 | 20 |······| 31 | 32 |
                                          | 49 |

Set A (k=0)
Beacon
Interval N=3  | 2 | 3 | 4 | 5 |······| 16 | 1 |
                                      | 34 |

              m=0   1   2   3  ···  14  15   16    Position in sequence

## Fig.7

Maximum duty-cycle scan        │ ID message received

        | Set B | Set A |           | Set B |

     |◄——— 2.56s ———►|

                                    312.5 μs
                                              |◄►|  ······ Generic FHS packets

                            |◄—— beacon_backoff ——►|◄—►|
                                              N FHS_repetitions
                                                  *(625 μs/2)

## Fig.8

Current FHS format

144 bits           16 bits

| Parity bits,CLK,BD_ADDR,mode flags etc. | CRC |

Rate 2/3 FEC

| Access Code | Header | |
|---|---|---|
| 72 bits | 54 bits | 240 bits |

New BEA format

| Access Code | Header |
|---|---|
| 72 bits | 54 bits |

| Parity bits,CLK,BD_ADDR,mode flags etc. | CRC |

OR

| User data (as per Generic FHS) |

160 bits

# Fig.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2298108 A
- WO 0249272 A
- WO 0201814 A
- WO 02058331 A
- WO 0201815 A
- US 5428637 A